(19) Europäisches Patentamt
European Patent Office
Office européen des brevets

(11) EP 4 501 992 A1

(12) **EUROPEAN PATENT APPLICATION**
published in accordance with Art. 153(4) EPC

(43) Date of publication:
**05.02.2025 Bulletin 2025/06**

(21) Application number: **23779008.4**

(22) Date of filing: **17.02.2023**

(51) International Patent Classification (IPC):
***C08F 220/38*** *(2006.01)* ***B32B 17/10*** *(2006.01)*
***B32B 27/30*** *(2006.01)* ***C08F 220/20*** *(2006.01)*
***G02B 1/04*** *(2006.01)* ***G02C 7/00*** *(2006.01)*

(52) Cooperative Patent Classification (CPC):
**B32B 17/10; B32B 27/30; C08F 220/20; C08F 220/38; G02B 1/04; G02C 7/00**

(86) International application number:
**PCT/JP2023/005832**

(87) International publication number:
**WO 2023/188978 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022052317**

(71) Applicant: **Mitsui Chemicals, Inc.**
**Tokyo 104-0028 (JP)**

(72) Inventor: **TSUKADA, Yuichi**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **CURABLE COMPOSITION, CURED PRODUCT, MOLDED BODY, AND OPTICAL MATERIAL**

(57) Provided are [1] a curable composition containing a compound (A) having two or more thio(meth)acrylate groups and a compound (B) represented by Formula (1), [2] a cured product obtained by curing the curable composition [1], [3] a molded body including the cured product [2], and [4] an optical material including the molded body [3].

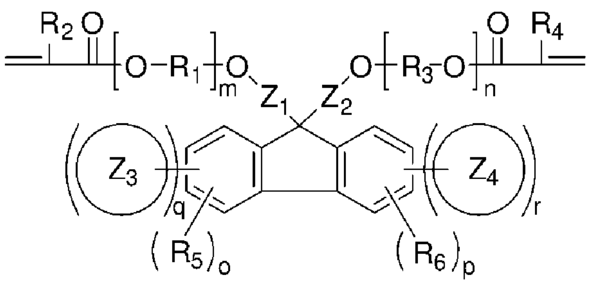

(1)

EP 4 501 992 A1

## Description

### TECHNICAL FIELD

The present invention relates to a curable composition, a cured product, a molded body, and an optical material.

### BACKGROUND ART

In the related art, glass has been suitably used as an optical material because the glass has a diversity of refractive indices and has a small fluctuation due to temperature and humidity. However, in recent years, a resin cured product has been used in response to demands for weight reduction, cost reduction, and the like.

For example, a wafer-level lens has been used in a camera lens module mounted on a smartphone in order to reduce the size and the height. In the wafer-level lens, a resin cured product having a high refractive index and having excellent heat resistance is required. In addition, in a so-called hybrid type wafer-level lens in which a resin lens is formed on a glass substrate, in order to suppress peeling between the glass substrate and the resin lens due to residual stress, it is required that a curing shrinkage rate when a composition cures is low.

As a method for obtaining a resin cured product having a higher refractive index, a method of using a material having transparency, which is obtained by photo-curing a composition containing thio(meth)acrylate or the like, has been reported in Patent Document 1 and Patent Document 2.

### RELATED DOCUMENT

### PATENT DOCUMENT

[Patent Document 1] Pamphlet of International Publication No. WO1998/24761
[Patent Document 2] Japanese Unexamined Patent Publication No. H8-325337

### SUMMARY OF THE INVENTION

### TECHNICAL PROBLEM

However, the resin cured product obtained by the methods described in Patent Documents 1 and 2 has a high refractive index but has a large shrinkage rate in a case of being cured, and thus it has a problem in adhesiveness to glass.

The present invention has been made in view of the above circumstances, and an object of the present invention is to provide a curable composition with which a cured product with an improved performance balance of high refractive index, low curing shrinkage, and glass adhesiveness can be obtained; and a cured product, a molded body, and an optical material with an improved performance balance of high refractive index, low curing shrinkage, and glass adhesiveness.

### SOLUTION TO PROBLEM

The present inventors have made intensive studies to solve the above-described problems. As a result, it has been found that, by using a combination of a compound having two or more thio(meth)acrylate groups and a compound having a constitutional unit derived from a specific fluorene-based monomer, it is possible to improve the performance balance of high refractive index, low curing shrinkage, and glass adhesiveness of the cured product to be obtained, thereby completing the present invention.

According to the present invention, there are provided a curable composition, a cured product, a molded body, and an optical material, which are described below.

[1] A curable composition containing:

a compound (A) having two or more thio(meth)acrylate groups; and
a compound (B) represented by Formula (1).

[Chem. 1]

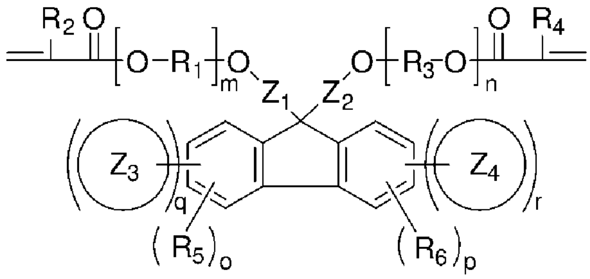

(1)

(in Formula (1), $Z_1$ and $Z_2$ each independently represent an aromatic carbon ring or an alkylene group, provided that any hydrogen atom may be substituted with an alkyl group or an alkoxy group, $Z_3$ and $Z_4$ each independently represent an aromatic carbon ring or an alkyl group, provided that any hydrogen atom may be substituted with an alkyl group or an alkoxy group, $R_1$ and $R_3$ each independently represent an alkylene group having 1 or more and 10 or less carbon atoms, $R_2$ and $R_4$ each independently represent a hydrogen atom or a methyl group, $R_5$ and $R_6$ each independently represent an alkyl group, m and n each independently represent an integer of 0 or more, and o, p, q and r each represent an integer of 0 or more, satisfying relationships of $o + q \leq 4$ and $p + r \leq 4$)

[2] The curable composition according to [1],

in which the compound (A) includes at least one selected from the group consisting of a compound represented by Formula (2) .

[Chem. 2]

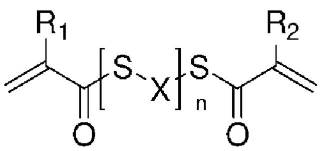

(2)

(in Formula (2), n represents an integer of 1 or more and 5 or less, $R_1$ and $R_2$ each independently represent a hydrogen atom or a methyl group, and X represents an alkylene group having 1 or more and 4 or less carbon atoms, provided that any hydrogen atom may be substituted with a structure of Formula (3))

[Chem. 3]

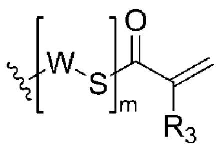

(3)

(in Formula (3), $R_3$ represents a hydrogen atom or a methyl group, a plurality of $R_3$'s may be the same or different from each other, W represents an alkylene group having 1 or more and 4 or less carbon atoms, and m represents an integer of 1 or more)

[3] The curable composition according to [1] or [2],

in which the compound (A) includes at least one selected from the group consisting of compounds represented by the following chemical formulae.

[Chem. 4]

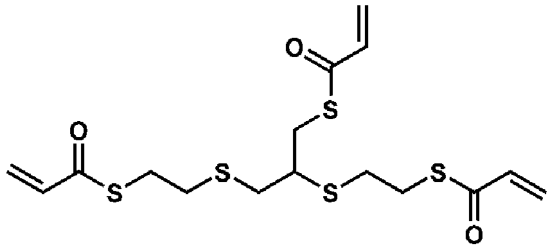

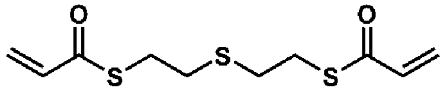

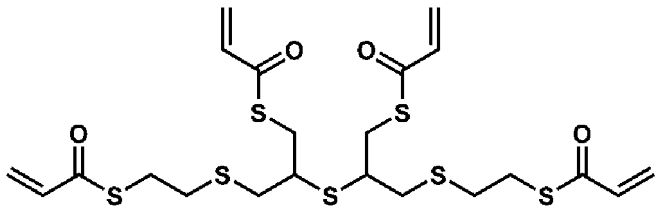

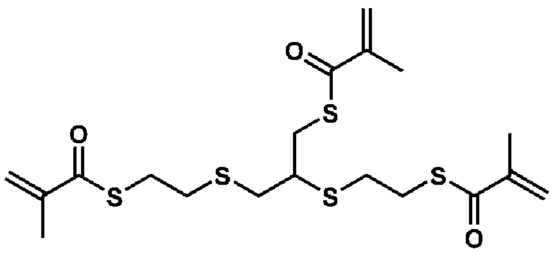

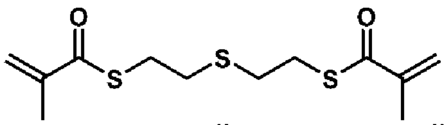

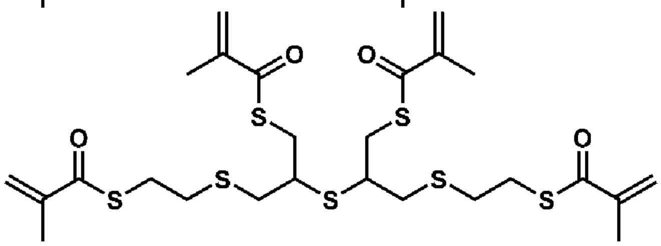

[4] The curable composition according to any one of [1] to [3],
in which a content of the compound (B) in the curable composition is 10 parts by mass or more and 70 parts by mass or less with respect to 100 parts by mass of the curable composition.
[5] The curable composition according to any one of [1] to [4],
in which the compound (B) includes at least one selected from the group consisting of 9,9-bis(4-(meth)acryloyloxyphenyl)fluorene, 9,9-bis(4-(2-(meth)acryloyloxyethoxy)phenyl)fluorene, 9,9-bis(4-(3-(meth)acryloyloxypropoxy)phenyl)fluorene, 9,9-bis(4-(2-(meth)acryloyloxypropoxy)phenyl)fluorene, 9,9-bis(4-(meth)acryloyloxy-3-methylphenyl)fluorene, 9,9-bis[4-(2-(meth)acryloyloxyethoxy)-3-methylphenyl]fluorene, 9,9-bis[4-(3-(meth)acryloyloxypropoxy)-3-methylphenyl]fluorene, 9,9-bis[4-(2-(meth)acryloyloxypropoxy)-3-methylphenyl]fluorene, 9,9-bis(4-(meth)acryloyloxy-3-ethylphenyl)fluorene, 9,9-bis[4-(2-(meth)acryloyloxyethoxy)-3-ethylphenyl]fluorene, 9,9-bis[4-(3-(meth)acryloyloxypropoxy)-3-ethylphenyl]fluorene, 9,9-bis[4-(2-(meth)acryloyloxypropoxy)-3-ethylphenyl]fluorene, 9,9-bis(2-(meth)acryloyloxyethyl)-1,8-diphenylfluorene, 9,9-bis(3-(meth)acryloyloxypropyl)-1,8-diphenylfluorene, 9,9-bis(2-(meth)acryloyloxypropyl)-1,8-diphenylfluorene, 9,9-bis(2-(meth)acryloyloxyethyl)-2,7-diphenylfluorene, 9,9-bis(3-(meth)acryloyloxypropyl)-2,7-diphenylfluorene, 9,9-bis(2-(meth)acryloyloxypropyl)-2,7-diphenylfluorene, 9,9-bis(2-(meth)acryloyloxyethyl)-3,6-diphenylfluorene, 9,9-bis(3-(meth)acryloyloxypropyl)-3,6-diphenylfluorene, 9,9-bis(2-(meth)acryloyloxypropyl)-3,6-diphenylfluorene, 9,9-bis(2-(meth)acryloyloxyethyl)-4,5-diphenylfluorene, 9,9-bis(3-(meth)acryloyloxypropyl)-4,5-diphenylfluorene, 9,9-bis(2-(meth)acryloyloxypropyl)-4,5-diphenylfluorene, 9,9-bis(2-(meth)acryloyloxyethyl)-1,8-bis(naphth-1-yl)fluorene, 9,9-bis(3-(meth)acryloyloxypropyl)-1,8-bis(naphth-1-yl)fluorene, 9,9-bis(2-(meth)acryloyloxypropyl)-1,8-bis(naphth-1-yl)fluorene, 9,9-bis(2-(meth)acryloyloxyethyl)-2,7-bis(naphth-1-yl)fluorene, 9,9-bis(3-(meth)acryloyloxypropyl)-2,7-bis(naphth-1-yl) fluorene, 9,9-bis(2-(meth)acryloyloxypropyl)-2,7-bis(naphth-1-yl)fluorene, 9,9-bis(2-(meth)acryloyloxyethyl)-3,6-bis(naphth-1-yl)fluorene, 9,9-bis(3-(meth)acryloyloxypropyl)-3,6-bis(naphth-1-yl)fluorene, 9,9-bis(2-(meth)acryloyloxypropyl)-3,6-bis(naphth-1-yl)fluorene, 9,9-bis(2-(meth)acryloyloxyethyl)-4,5-bis(naphth-1-yl)fluorene, 9,9-bis(3-(meth)acryloyloxypropyl)-4,5-bis(naphth-1-yl)fluorene, 9,9-bis(2-(meth)acryloyloxypropyl)-4,5-bis(naphth-1-yl)fluorene, 9,9-bis(2-(meth)acryloyloxyethyl)-1,8-bis(naphth-2-yl)fluorene, 9,9-bis(3-(meth)acryloyloxypropyl)-1,8-bis(naphth-2-yl)fluorene, 9,9-bis(2-(meth)acryloyloxypropyl)-1,8-bis(naphth-2-yl)fluorene, 9,9-bis(2-(meth)acryloyloxyethyl)-2,7-bis(naphth-2-yl)fluorene, 9,9-bis(3-(meth)acryloyloxypropyl)-2,7-bis(naphth-2-yl)fluorene, 9,9-bis(2-(meth)acryloyloxypropyl)-2,7-bis(naphth-2-yl)fluorene, 9,9-bis(2-(meth)acryloyloxyethyl)-3,6-bis(naphth-2-yl) fluorene, 9,9-bis(3-(meth)acryloyloxypropyl)-3,6-bis(naphth-2-yl)fluorene, 9,9-bis(2-(meth)acryloyloxypropyl)-3,6-bis(naphth-2-yl)fluorene, 9,9-bis(2-(meth)acryloyloxyethyl)-4,5-bis(naphth-2-yl)fluorene, 9,9-bis(3-(meth)acryloyloxypropyl)-4,5-bis(naphth-2-yl)fluorene, and 9,9-bis(2-(meth)acryloyloxypropyl)-4,5-bis(naphth-2-yl)fluorene.

[6] The curable composition according to any one of [1] to [5], further containing:
a polymerization initiator.

[7] The curable composition according to any one of [1] to [6], further containing:
at least one selected from the group consisting of a silane coupling agent, an antioxidant, an ultraviolet absorber, and a light stabilizer.

[8] The curable composition according to any one of [1] to [7],
in which, in a case where a specific gravity of the curable composition, which is measured using a pycnometer in accordance with JIS Z 8804:2012, is denoted as $d^1$, and a specific gravity of a test piece having a thickness of 250 um, which is formed of a cured product of the curable composition, is denoted as $d^2$, a curing shrinkage rate of the curable composition, which is represented by $(1 - d^1/d^2) \times 100$, is 9.0% or less.

[9] The curable composition according to any one of [1] to [8],
in which the curable composition is usable in an optical material.

[10] A cured product obtained by curing the curable composition according to any one of [1] to [9].

[11] The cured product according to [10],
in which, in a case where a test piece having a thickness of 250 um is produced from the cured product, a refractive index (nD) of the test piece with respect to D-line (589.3 nm) is 1.600 or more.

[12] The cured product according to [10] or [11],
in which, in a case where a test piece having a thickness of 250 um is produced from the cured product, an Abbe number (vD) of the test piece, which is measured in accordance with ASTM D542, is 20 or more.

[13] A molded body including:
the cured product according to any one of [10] to [12].

[14] An optical material including:
the molded body according to [13].

[15] The optical material according to [14], further including:

a glass substrate,
in which the optical material is a laminate of the molded body and the glass substrate.

[16] The optical material according to [14] or [15],
in which the optical material is an optical lens.

ADVANTAGEOUS EFFECTS OF INVENTION

According to the present invention, it is possible to provide a curable composition with which a cured product with an improved performance balance of high refractive index, low curing shrinkage, and glass adhesiveness can be obtained; and a cured product, a molded body, and an optical material with an improved performance balance of high refractive index, low curing shrinkage, and glass adhesiveness.

DESCRIPTION OF EMBODIMENTS

Hereinafter, the present invention will be described based on embodiments. In the present specification, "A to B" indicating a numerical range represents "A or more and B or less" unless otherwise specified. In addition, a notation of "(meth)acrylic" in the present specification indicates at least one selected from the group consisting of acrylic and

methacrylic, and a similar notation such as "thio(meth)acrylate" and "(meth)acrylate" is also the same. In addition, "(meth) acryloyl group" in the present specification indicates at least one selected from the group consisting of an acryloyl group represented by $-C(=O)-CH=CH_2$ and a methacryloyl group represented by $-C(=O)-C(CH_3)=CH_2$.

[Curable composition]

The curable composition according to the present invention contains a compound (A) having two or more thio(meth)acrylate groups (hereinafter, also simply referred to as "compound (A)"), and a compound (B) represented by Formula (1) (hereinafter, also simply referred to as "compound (B)").

[Chem. 5]

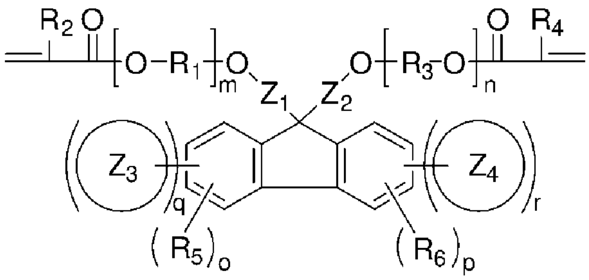

(1)

In Formula (1), $Z_1$ and $Z_2$ each independently represent an aromatic carbon ring or an alkylene group, provided that any hydrogen atom may be substituted with an alkyl group or an alkoxy group, $Z_3$ and $Z_4$ each independently represent an aromatic carbon ring or an alkyl group, provided that any hydrogen atom may be substituted with an alkyl group or an alkoxy group, $R_1$ and $R_3$ each independently represent an alkylene group having 1 or more and 10 or less carbon atoms, $R_2$ and $R_4$ each independently represent a hydrogen atom or a methyl group, $R_5$ and $R_6$ each independently represent an alkyl group, m and n each independently represent an integer of 0 or more, and o, p, q and r each represent an integer of 0 or more, satisfying relationships of $o + q \leq 4$ and $p + r \leq 4$.

With the curable composition according to the present invention, it is possible to obtain a cured product, a molded body, and an optical material in which a performance balance of high refractive index, low curing shrinkage, and glass adhesiveness is improved.

Hereinafter, each component constituting the curable composition according to the present invention will be described.

<Compound (A)>

The compound (A) is not particularly limited as long as it is a compound having two or more thio(meth)acrylate groups, but from the viewpoint of further improving the performance balance of high refractive index, low curing shrinkage, and glass adhesiveness of a cured product to be obtained, it is preferable to include at least one selected from a compound represented by Formula (2).

[Chem. 6]

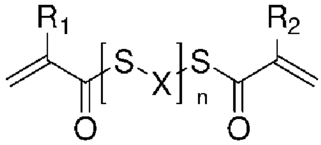

(2)

In Formula (2), n represents an integer of 1 or more and 5 or less, preferably an integer of 1 or more and 4 or less and more preferably an integer of 2 or more and 4 or less; $R_1$ and $R_2$ each independently represent a hydrogen atom or a methyl group; and X represents an alkylene group having 1 or more and 4 or less carbon atoms, provided that any hydrogen atom may be substituted with a structure of Formula (3), preferably an alkylene group having 2 or more and 4 or less carbon atoms, provided that any hydrogen atom may be substituted with a structure of Formula (3), more preferably an alkylene group having 2 or 3 carbon atoms, provided that any hydrogen atom may be substituted with a structure of Formula (3), still more preferably an alkylene group having 2 carbon atoms, provided that any hydrogen atom may be

substituted with a structure of Formula (3), and even more preferably an alkylene group having 2 carbon atoms, provided that one or two hydrogen atoms may be substituted with a structure of Formula (3).

In addition, in Formula (2), it is preferable that any hydrogen atom of X is substituted with the structure of Formula (3), and it is more preferable that one hydrogen atom in one or two X's is substituted with the structure of Formula (3).

[Chem. 7]

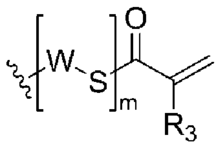

(3)

In Formula (3), $R_3$ represents a hydrogen atom or a methyl group, and a plurality of $R_3$'s may be the same or different from each other; W represents an alkylene group having 1 or more and 4 or less carbon atoms, preferably an alkylene group having 1 or more and 3 or less carbon atoms, more preferably an alkylene group having 1 or 2 carbon atoms, and still more preferably an alkylene group having 1 carbon atom; and m represents an integer of 1 or more, preferably an integer of 1 or more and 4 or less, more preferably an integer of 1 or more and 3 or less, still more preferably 1 or 2, and even more preferably 1.

From the viewpoint of further improving the performance balance of high refractive index, low curing shrinkage, and glass adhesiveness of a cured product to be obtained, it is preferable that the compound (A) includes at least one selected from the group consisting of compounds represented by the following chemical formulae.

[Chem. 8]

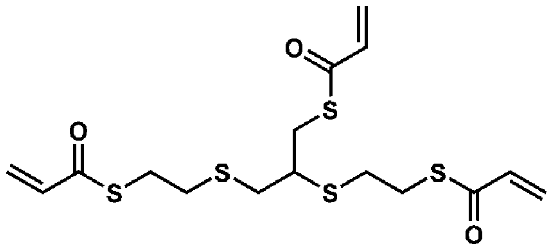

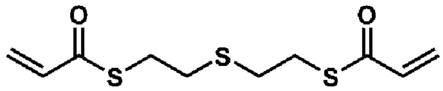

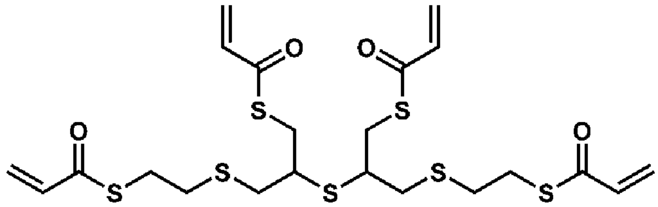

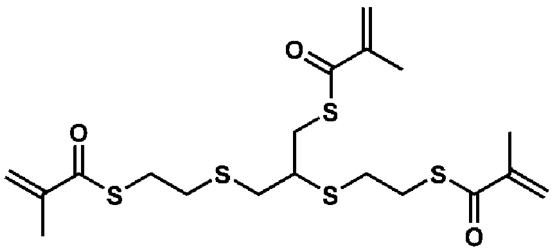

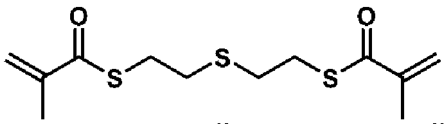

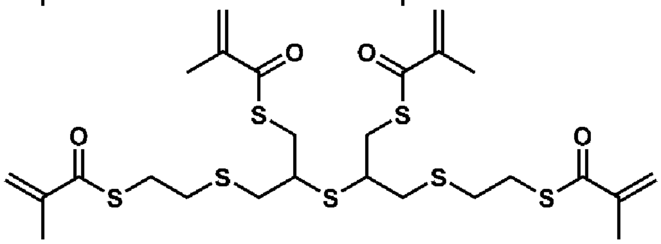

From the viewpoint of further improving the performance balance of high refractive index, low curing shrinkage, and glass adhesiveness of a cured product to be obtained, a content of the compound (A) in the curable composition according to the present invention is preferably 30 parts by mass or more, more preferably 40 parts by mass or more, still more preferably 50 parts by mass or more, and even more preferably 55 parts by mass or more, and is preferably 90 parts by mass or less, more preferably 85 parts by mass or less, still more preferably 80 parts by mass or less, even more preferably 70 parts by mass or less, even still more preferably 65 parts by mass or less, and further more preferably 60 parts by mass or less, with respect to 100 parts by mass of the curable composition according to present invention.

<Compound (B)>

The compound (B) is represented by Formula (1).

[Chem. 9]

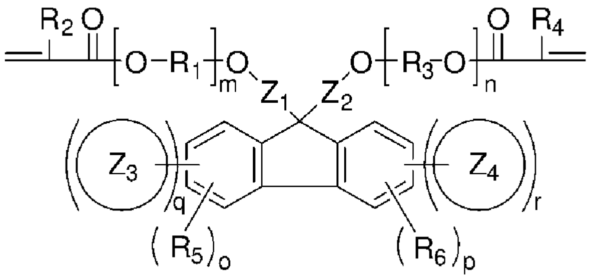

(1)

In Formula (1), $Z_1$ and $Z_2$ each independently represent an aromatic carbon ring or an alkylene group, provided that any hydrogen atom may be substituted with an alkyl group or an alkoxy group. $Z_1$ and $Z_2$ each independently preferably represent a benzene ring, a naphthalene ring, or an alkylene group having 1 or more and 4 or less carbon atoms, and more preferably a benzene ring or an alkylene group having 1 or more and 3 or less carbon atoms.

In Formula (1), $Z_3$ and $Z_4$ each independently represent an aromatic carbon ring or an alkyl group, provided that any hydrogen atom may be substituted with an alkyl group or an alkoxy group. $Z_3$ and $Z_4$ each independently preferably represent an aromatic carbon ring, more preferably a benzene ring or a naphthalene ring, and still more preferably a naphthalene ring.

In Formula (1), $R_1$ and $R_3$ each independently represent an alkylene group having 1 or more and 10 or less carbon atoms. $R_1$ and $R_3$ each independently preferably represent an alkylene group having 1 or more and 4 or less carbon atoms, more preferably an alkylene group having 1 or more and 3 or less carbon atoms, still more preferably an alkylene group having 2 or 3 carbon atoms, and even more preferably an alkylene group having 2 carbon atoms.

In Formula (1), $R_2$ and $R_4$ each independently represent a hydrogen atom or a methyl group. $R_2$ and $R_4$ each independently preferably represent a hydrogen atom.

In Formula (1), $R_5$ and $R_6$ each independently represent an alkyl group. $R_5$ and $R_6$ each independently preferably represent an alkyl group having 1 or more and 4 or less carbon atoms, more preferably an alkyl group having 1 or 2 carbon atoms, and still more preferably an alkyl group having 1 carbon atom.

In Formula (1), m and n each independently represent an integer of 0 or more. m and n each independently preferably represent an integer of 0 or more and 4 or less, more preferably an integer of 0 or more and 2 or less, and still more preferably 0 or 1.

In Formula (1), o, p, q and r each represent an integer of 0 or more, satisfying relationships of $o + q \leq 4$ and $p + r \leq 4$. q and r each independently preferably represent an integer of 0 or more and 2 or less, and more preferably 0 or 1. o and p each independently preferably represent an integer of 0 or more and 2 or less, more preferably 0 or 1, and still more preferably 0.

From the viewpoint of further improving the performance balance of high refractive index, low curing shrinkage, and glass adhesiveness of the cured product to be obtained, the compound (B) is preferably the compound represented by Formula (1), in which $Z_1$ and $Z_2$ represent a benzene ring, a naphthalene ring, or an alkylene group having 1 or more and 4 or less carbon atoms, $Z_3$ and $Z_4$ represent a benzene ring or a naphthalene ring, $R_1$ and $R_3$ represent an alkylene group having 1 or more and 4 or less carbon atoms, $R_2$ and $R_4$ represent a hydrogen atom or a methyl group, m and n represent an integer of 0 or more and 4 or less, q and r represent 0 or 1, and o and p represent 0; and more preferably the compound represented by Formula (1), in which $Z_1$ and $Z_2$ represent a benzene ring or an alkylene group having 1 or more and 3 or less carbon atoms, $Z_3$ and $Z_4$ represent a naphthalene ring, $R_1$ and $R_3$ represent an alkylene group having 1 or more and 3 or less carbon atoms, $R_2$ and $R_4$ represent a hydrogen atom or a methyl group, m and n represent 0 or 1, q and r sepresent 0 or 1, and o and p represent 0.

From the viewpoint of further improving the performance balance of high refractive index, low curing shrinkage, and glass adhesiveness of the cured product to be obtained, the compound (B) is preferably at least one selected from the group consisting of 9,9-bis(4-((meth)acryloyloxyphenyl)fluorene, 9,9-bis(4-(2-(meth)acryloyloxyethoxy)phenyl)fluorene, 9,9-bis(4-(3-(meth)acryloyloxypropoxy)phenyl)fluorene, 9,9-bis(4-(2-(meth)acryloyloxypropoxy)phenyl)fluorene, 9,9-bis(4-(meth)acryloyloxy-3-methylphenyl)fluorene, 9,9-bis[4-(2-(meth)acryloyloxyethoxy)-3-methylphenyl]fluorene, 9,9-bis[4-(3-(meth)acryloyloxypropoxy)-3-methylphenyl]fluorene, 9,9-bis[4-(2-(meth)acryloyloxypropoxy)-3-methylphenyl] fluorene, 9,9-bis(4-(meth)acryloyloxy-3-ethylphenyl)fluorene, 9,9-bis[4-(2-(meth)acryloyloxyethoxy)-3-ethylphenyl] fluorene, 9,9-bis[4-(3-(meth)acryloyloxypropoxy)-3-ethylphenyl]fluorene, 9,9-bis[4-(2-(meth)acryloyloxypropoxy)-3-ethylphenyl]fluorene, 9,9-bis(2-(meth)acryloyloxyethyl)-1,8-diphenylfluorene, 9,9-bis(3-(meth)acryloyloxypropyl)-1,8-diphenylfluorene, 9,9-bis(2-(meth)acryloyloxypropyl)-1,8-diphenylfluorene, 9,9-bis(2-(meth)acryloyloxyethyl)-2,7-diphenylfluorene, 9,9-bis(3-(meth)acryloyloxypropyl)-2,7-diphenylfluorene, 9,9-bis(2-(meth)acryloyloxypropyl)-2,7-diphenylfluorene, 9,9-bis(2-(meth)acryloyloxyethyl)-3,6-diphenylfluorene, 9,9-bis(3-(meth)acryloyloxypropyl)-3,6-diphenylfluorene, 9,9-bis(2-(meth)acryloyloxypropyl)-3,6-diphenylfluorene, 9,9-bis(2-(meth)acryloyloxyethyl)-4,5-diphenylfluorene, 9,9-bis(3-(meth)acryloyloxypropyl)-4,5-diphenylfluorene, 9,9-bis(2-(meth)acryloyloxypropyl)-4,5-diphenylfluorene, 9,9-bis(2-(meth)acryloyloxyethyl)-1,8-bis(naphth-1-yl)fluorene, 9,9-bis(3-(meth)acryloyloxypropyl)-1,8-bis(naphth-1-yl) fluorene, 9,9-bis(2-(meth)acryloyloxypropyl)-1,8-bis(naphth-1-yl)fluorene, 9,9-bis(2-(meth)acryloyloxyethyl)-2,7-bis(naphth-1-yl)fluorene, 9,9-bis(3-(meth)acryloyloxypropyl)-2,7-bis(naphth-1-yl)fluorene, 9,9-bis(2-(meth)acryloyloxypropyl)-2,7-bis(naphth-1-yl)fluorene, 9,9-bis(2-(meth)acryloyloxyethyl)-3,6-bis(naphth-1-yl)fluorene, 9,9-bis(3-(meth) acryloyloxypropyl)-3,6-bis(naphth-1-yl)fluorene, 9,9-bis(2-(meth)acryloyloxypropyl)-3,6-bis(naphth-1-yl)fluorene, 9,9-bis(2-(meth)acryloyloxyethyl)-4,5-bis(naphth-1-yl)fluorene, 9,9-bis(3-(meth)acryloyloxypropyl)-4,5-bis(naphth-1-yl) fluorene, 9,9-bis(2-(meth)acryloyloxypropyl)-4,5-bis(naphth-1-yl)fluorene, 9,9-bis(2-(meth)acryloyloxyethyl)-1,8-bis(naphth-2-yl)fluorene, 9,9-bis(3-(meth)acryloyloxypropyl)-1,8-bis(naphth-2-yl)fluorene, 9,9-bis(2-(meth)acryloyloxypropyl)-1,8-bis(naphth-2-yl)fluorene, 9,9-bis(2-(meth)acryloyloxyethyl)-2,7-bis(naphth-2-yl)fluorene, 9,9-bis(3-(meth) acryloyloxypropyl)-2,7-bis(naphth-2-yl)fluorene, 9,9-bis(2-(meth)acryloyloxypropyl)-2,7-bis(naphth-2-yl)fluorene, 9,9-bis(2-(meth)acryloyloxyethyl)-3,6-bis(naphth-2-yl)fluorene, 9,9-bis(3-(meth)acryloyloxypropyl)-3,6-bis(naphth-2-yl) fluorene, 9,9-bis(2-(meth)acryloyloxypropyl)-3,6-bis(naphth-2-yl)fluorene, 9,9-bis(2-(meth)acryloyloxyethyl)-4,5-bis(naphth-2-yl)fluorene, 9,9-bis(3-(meth)acryloyloxypropyl)-4,5-bis(naphth-2-yl)fluorene, and 9,9-bis(2-(meth)acryloyloxypropyl)-4,5-bis(naphth-2-yl)fluorene; more preferably at least one selected from the group consisting of 9,9-bis(4-(meth)acryloyloxyphenyl)fluorene, 9,9-bis(4-(2-(meth)acryloyloxyethoxy)phenylfluorene, 9,9-bis(4-(3-(meth)acryloyloxypropoxy)phenyl)fluorene, 9,9-bis(4-(2-(meth)acryloyloxypropoxy)phenyl)fluorene, 9,9-bis(2-(meth)acryloyloxyethyl)-2,7-diphenylfluorene, 9,9-bis(3-(meth)acryloyloxypropyl)-2,7-diphenylfluorene, 9,9-bis(2-(meth)acryloyloxypropyl)-2,7-diphenylfluorene, 9,9-bis(2-(meth)acryloyloxyethyl)-3,6-diphenylfluorene, 9,9-bis(3-(meth)acryloyloxypropyl)-3,6-bis-diphenylfluorene, 9,9-bis(2-(meth)acryloyloxypropyl)-3,6-diphenylfluorene, 9,9-bis(2-(meth)acryloyloxyethyl)-2,7-bis(naphth-1-yl)fluorene, 9,9-bis(3-(meth)acryloyloxypropyl)-2,7-bis(naphth-1-yl)fluorene, 9,9-bis(2-(meth) acryloyloxypropyl)-2,7-bis(naphth-1-yl)fluorene, 9,9-bis(2-(meth)acryloyloxyethyl)-3,6-bis(naphth-1-yl)fluorene, 9,9-bis(3-(meth)acryloyloxypropyl)-3,6-bis(naphth-1-yl)fluorene, 9,9-bis(2-(meth)acryloyloxypropyl)-3,6-bis(naphth-1-yl) fluorene, 9,9-bis(2-(meth)acryloyloxyethyl)-2,7-bis(naphth-2-yl)fluorene, 9,9-bis(3-(meth)acryloyloxypropyl)-2,7-bis(naphth-2-yl)fluorene, 9,9-bis(2-(meth)acryloyloxypropyl)-2,7-bis(naphth-2-yl)fluorene, 9,9-bis(2-(meth)acryloyloxyethyl)-3,6-bis(naphth-2-yl)fluorene, 9,9-bis(3-(meth)acryloyloxypropyl)-3,6-bis(naphth-2-yl)fluorene, and 9,9-bis(2-(meth)acryloyloxypropyl)-3,6-bis(naphth-2-yl)fluorene; and still more preferably at least one selected from the group consisting of 9,9-bis(4-(2-((meth)acryloyloxyethoxy)phenyl)fluorene, 9,9-bis(4-(3-((meth)acryloyloxypropoxy) phenyl)fluorene, 9,9-bis(4-(2-((meth)acryloyloxypropoxy)phenyl)fluorene, 9,9-bis(2-(meth)acryloyloxyethyl)-2,7-bis(naphth-1-yl)fluorene, 9,9-bis(3-(meth)acryloyloxypropyl)-2,7-bis(naphth-1-yl)fluorene, 9,9-bis(2-(meth)acryloyloxypropyl)-2,7-bis(naphth-1-yl)fluorene, 9,9-bis(2-(meth)acryloyloxyethyl)-3,6-bis(naphth-1-yl)fluorene, 9,9-bis(3-(meth) acryloyloxypropyl)-3,6-bis(naphth-1-yl)fluorene, 9,9-bis(2-(meth)acryloyloxypropyl)-3,6-bis(naphth-1-yl)fluorene, 9,9-bis(2-(meth)acryloyloxyethyl)-2,7-bis(naphth-2-yl)fluorene, 9,9-bis(3-(meth)acryloyloxypropyl)-2,7-bis(naphth-2-yl) fluorene, 9,9-bis(2-(meth)acryloyloxypropyl)-2,7-bis(naphth-2-yl)fluorene, 9,9-bis(2-(meth)acryloyloxyethyl)-3,6-bis(naphth-2-yl)fluorene, 9,9-bis(3-(meth)acryloyloxypropyl)-3,6-bis(naphth-2-yl)fluorene, and 9,9-bis(2-(meth)acryloyloxypropyl)-3,6-bis(naphth-2-yl)fluorene.

From the viewpoint of further improving the performance balance of high refractive index, low curing shrinkage, and glass adhesiveness of a cured product to be obtained, a content of the compound (B) in the curable composition according to the present invention is preferably 10 parts by mass or more, more preferably 15 parts by mass or more, still more preferably 20 parts by mass or more, even more preferably 30 parts by mass or more, further more preferably 35 parts by mass or more, and even further more preferably 40 parts by mass or more, and is preferably 70 parts by mass or less, more preferably 60 parts by mass or less, still more preferably 50 parts by mass or less, and even more preferably 45 parts by mass or less, with respect to 100 parts by mass of the curable composition according to the present invention.

(Method of synthesizing compound (B))

Examples of a commercially available product of the compound (B) include a bifunctional acrylate "A-BPEF" manufactured by Shin-Nakamura Chemical Co., Ltd., a bifunctional acrylate "OGSOL EA-0200" and "OGSOL EA-0300" manufactured by Osaka Gas Chemicals Co., Ltd.

In addition, the compound (B) can be synthesized by subjecting a commercially available fluorene derivative diol to (meth)acryloylation with (meth)acrylic acid anhydride, (meth)acryloyl chloride, or the like.

Examples of the commercially available fluorene derivative diol include bisphenoxyethanol fluorene (BPEF) or bisphenol fluorene (BPF) manufactured by Osaka Gas Chemicals Co., Ltd.

In addition, 9,9-bis(2-((meth)acryloyloxyethyl)-2,7-bis(naphth-2-yl)fluorene (DNEOA) can be synthesized by the following synthesis scheme. More specifically, it can be synthesized by a method of Synthesis Example 1 described in Examples.

[Chem. 10]

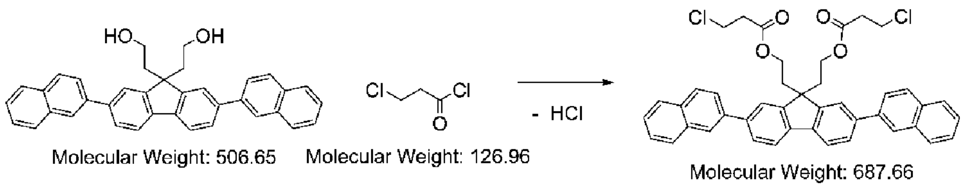


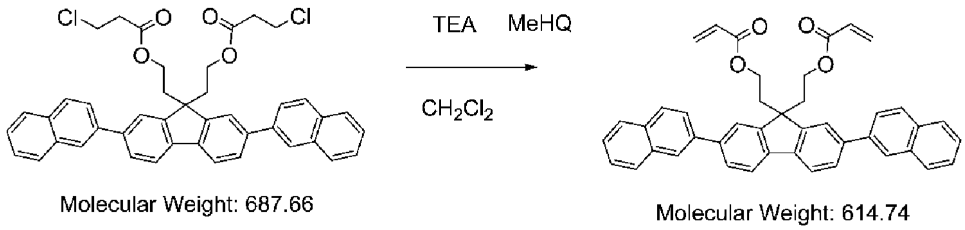


<Other components>

The curable composition according to the present invention may contain a component other than the compound (A) and the compound (B). Examples of other components include a polymerization initiator, an ultraviolet absorber, a resin modifier, an internal mold release agent, a silane coupling agent, an antioxidant, a light stabilizer, a processing stabilizer, a bluing agent, a polymerized metal deactivator, a flame retardant, a lubricant, an antistatic agent, a heat-ray shielding agent, a fluorescent dye (including a fluorescent brightener), a pigment, a light scattering agent, a reinforcing filler, a surfactant, an antibacterial agent, a plasticizer, a compatibilizer, and other resins or elastomers. Among these, from the viewpoint of further improving curing properties, the curable composition according to the present invention preferably contains a polymerization initiator. In addition, the curable composition according to the present invention preferably further contains at least one selected from the group consisting of a silane coupling agent, an antioxidant, an ultraviolet absorber, and a light stabilizer.

From the viewpoint of further improving the performance balance of high refractive index, low curing shrinkage, and glass adhesiveness of the cured product to be obtained, the curable composition according to the present invention preferably contains a polymerization initiator. As the polymerization initiator, for example, a thermal radical polymerization initiator, a photoradical polymerization initiator, or a combination thereof can be used.

Examples of the thermal radical polymerization initiator include dialkyl peroxides such as dicumyl peroxide, t-butyl cumyl peroxide, 2,5-bis(t-butylperoxy)2,5-dimethylhexane, 2,5-bis(t-butylperoxy)2,5-dimethylhexane-3, di-t-butyl peroxide, isopropylcumyl-t-butyl peroxide, and bis($\alpha$-t-butylperoxyisopropyl)benzene; peroxyketals such as 1,1-bis(t-butylperoxy)cyclohexane, 1,1-bis(t-butylperoxy)3,3,5-trimethylcyclohexane, 1,1-bis(t-butylperoxy)cyclododecane, n-butyl-4,4-bis(t-butylperoxy)valerate, ethyl-3,3-bis(t-butylperoxy)butyrate and 3,3,6,6,9,9-hexamethyl-1,2,4,5-tetraoxacyclononane; peroxyesters such as bis(t-butylperoxy)isophthalate, t-butylperoxybenzoate, and t-butylperoxyacetate; hydroperoxides such as t-butyl hydroperoxide, t-hexyl hydroperoxide, cumene hydroperoxide, 1,1,3,3-tetramethylbutyl hydroperoxide, diisopropylbenzene hydroperoxide, and p-mentane hydroperoxide; dibenzyl compounds such as 2,3-dimethyl-2,3-diphenylbutane; and 3,3,5,7,7-pentamethyl-1,2,4-trioxepane.

Examples of the photoradical polymerization initiator include benzoin alkyl ether, benzyl dimethyl ketal, 1-hydroxycyclohexyl phenyl ketone, 2-hydroxy-2-methyl-1-phenylpropan-1-one, benzophenone, methyl benzoyl formate, isopropyl thioxantone, and a mixture of two or more thereof. In addition, it is also possible to use a sensitizer together with these photoradical polymerization initiators. Examples of the sensitizer include carbonyl compounds such as anthraquinone, 1,2-naphthoquinone, 1,4-naphthoquinone, benzanthrone, p,p'-tetramethylbenzophenone, and chloranil; nitro compounds such as nitrobenzene, p-dinitrobenzene, and 2-nitrofluorene; aromatic hydrocarbons such as anthracene and chrysene; sulfur compounds such as diphenyldisulfide; and nitrogen compounds such as nitroaniline, 2-chloro-4-nitroaniline, 5-nitro-2-aminotoluene, and tetracyanoethylene.

From the viewpoint of further improving the performance balance of high refractive index, low curing shrinkage, and glass adhesiveness of the cured product to be obtained, in a case where the total amount of the compound (A) and the compound (B) in the curable composition according to the present invention is set to 100 parts by mass, a content of the polymerization initiator in the curable composition according to the present invention is preferably 0.1 parts by mass or more, more preferably 0.5 parts by mass or more, still more preferably 1.0 part by mass or more, even more preferably 1.5

parts by mass or more, even still more preferably 2.0 parts by mass or more, and further more preferably 2.5 parts by mass or more, and is preferably 10 parts by mass or less, more preferably 8.0 parts by mass or less, still more preferably 5.0 parts by mass or less, and even more preferably 4.0 parts by mass or less.

From the viewpoint of further improving the performance balance of high refractive index, low curing shrinkage, and glass adhesiveness of the cured product to be obtained, the curable composition according to the present invention preferably contains a silane coupling agent. Examples of the silane coupling agent include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, tris-(trimethoxysilylpropyl)isocyanurate, 3-ureidopropyltrialkoxysilane, 3-mercaptopropylmethyldimethoxysilane, 3-mercaptopropyltrimethoxysilane, 3-isocyanatopropyltriethoxysilane, and 3-trimethoxysilylpropionic acid anhydride. These silane coupling agents are easily available from the market because they are sold by , for example, Shin-Etsu Chemical Co., Ltd., or the like.

From the viewpoint of further improving the performance balance of high refractive index, low curing shrinkage, and glass adhesiveness of the cured product to be obtained, in a case where the total amount of the compound (A) and the compound (B) in the curable composition according to the present invention is set to 100 parts by mass, a content of the silane coupling agent in the curable composition according to the present invention is preferably 0.001 parts by mass or more, more preferably 0.01 parts by mass or more, still more preferably 0.1 part by mass or more, and even more preferably 0.5 parts by mass or more, and is preferably 10 parts by mass or less, more preferably 5.0 parts by mass or less, still more preferably 3.0 parts by mass or less, and even more preferably 1.5 parts by mass or less.

From the viewpoint of further improving ultraviolet resistance, the curable composition according to the present invention preferably contains an ultraviolet absorber. Examples of the ultraviolet absorber include a benzophenone-based ultraviolet absorber, a benzotriazole-based ultraviolet absorber, a triazine-based ultraviolet absorber, and a benzoxazine-based ultraviolet absorber. Examples of the benzophenone-based ultraviolet absorber include 4-methoxy-2-hydroxybenzophenone (molecular weight: 228), 4-methoxy-2-hydroxybenzophenone-5-sulfonic acid (molecular weight: 308), 2,4-dihydroxybenzophenone (molecular weight: 214), 4,4'-dimethoxy-2,2'-dihydroxybenzophenone (molecular weight: 274), 4,4'-dimethoxy-2,2'-dihydroxy-5,5'-disulfonic acid benzophenone disodium salt (molecular weight: 478), 2,2'-4,4'-tetrahydroxybenzophenone (molecular weight: 246), sodium hydroxymethoxybenzophenone sulfonate (molecular weight: 376), octabenzone (molecular weight: 326), 2-hydroxy-4-m-octyloxy-benzophenone (molecular weight: 345), 2-hydroxy-4-n-octyloxybenzophenone (molecular weight: 326), and bis(5-benzoyl-4-hydroxy-2-methoxyphenyl) methane (molecular weight: 468).

In addition, examples of the benzotriazole-based ultraviolet absorber include 2-(2H-benzotriazole-2-yl)-p-cresol (molecular weight: 225), 2-(2H-benzotriazole-2-yl)-4-6-bis(1-methyl-1-phenylethyl)phenol (molecular weight: 448), 2-[5-chloro(2H)-benzotriazole-2-yl]-4-methyl-6-(tert-butyl)phenol (molecular weight: 316), 2,4-di-tert-butyl-6-(5-chloro-2H-1,2,3-benzotriazole-2-yl)phenol (molecular weight: 358), 2-(2H-benzotriazole-2-yl)-4,6-tert-pentylphenol (molecular weight: 352), 2-(2H-benzotriazole-2-yl)-4-(1,1,3,3-tetramethylbutyl)phenol (molecular weight: 323), 2,2'-methylenebis [6-(2H-benzotriazole-2-yl)-4-(1,1,3,3-tetramethylbutyl)phenol] (molecular weight: 659), 2-(2'-hydroxy-3'-tert-butyl-5'-methylphenyl)-5-chlorobenzotriazole, 2-(2'-hydroxy-3',5-di-tert-butyl-phenyl)-5-chlorobenzotriazole (molecular weight: 357), 2-(2'-hydroxy-5'-methylphenyl)benzotriazole (molecular weight: 225), and 2-(2-hydroxy-5-octylphenyl)-benzotriazole (molecular weight: 323).

Furthermore, examples of the triazine-based ultraviolet absorber include 2-(4,6-diphenyl-1,3,5-triazin-2-yl)-5-[(hexyl)oxy]-phenol (molecular weight: 426), 2-[4,6-bis(2,4-dimethylphenyl)-1,3,5-triazin-2-yl]-5-(octyloxy)phenol (molecular weight: 509), 2,4,6-tris(2-hydroxy-4-hexyloxy-3-methylphenyl)-1,3,5-triazine (molecular weight: 700), 2-(4,6-diphenyl-1,3,5-triazin-2-yl)-5-[2-(2-ethylhexanoyloxy)ethoxy]phenol (molecular weight: 512), and 1,6-hexanediamine, N,N'-bis(1,2,2,6,6-pentamethyl-4-piperidyl), and polymersmorpholine-2,4,6-trichloro-1,3,5-triazine.

In addition, examples of the benzoxazine-based ultraviolet absorber include 2,2'-(1,4-phenylene)bis(4H-3,1-benzoxazine-4-one) (molecular weight: 368). In addition, examples thereof include tetraethyl-2,2-(1,4-phenylene-dimethylene-bismalonate (molecular weight: 418) having a malonate ester structure and 2-ethyl-2'-ethoxy-oxamide (molecular weight: 312) having a succinimide structure. Two or more of the above-described components can be used in combination.

From the viewpoint of further improving the performance balance of high refractive index, low curing shrinkage, glass adhesiveness, and ultraviolet resistance of the cured product to be obtained, in a case where the total amount of the compound (A) and the compound (B) in the curable composition according to the present invention is set to 100 parts by mass, a content of the ultraviolet absorber in the curable composition according to the present invention is preferably 0.001 parts by mass or more, more preferably 0.005 parts by mass or more, and still more preferably 0.01 part by mass or more,

and is preferably 1.0 part by mass or less, more preferably 0.5 parts by mass or less, still more preferably 0.2 parts by mass or less, and even more preferably 0.1 parts by mass or less.

From the viewpoint of further improving oxidation resistance, the curable composition according to the present invention preferably contains an antioxidant. Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocinnamide), 3,5-di-tert-butyl-4-hydroxybenzylphosphonate-diethyl ester, tris(3,5-di-tert-butyl-4-hydroxybenzyl)isocyanurate, and 3,9-bis{1,1-dimethyl-2-[β-(3-tert-butyl-4-hydroxy-5-methylphenyl)propionyloxy]ethyl}-2,4,8,10-tetraoxaspiro (5,5) undecane.

From the viewpoint of further improving the performance balance of high refractive index, low curing shrinkage, glass adhesiveness, and oxidation resistance of the cured product to be obtained, in a case where the total amount of the compound (A) and the compound (B) in the curable composition according to the present invention is set to 100 parts by mass, a content of the antioxidant in the curable composition according to the present invention is preferably 0.01 parts by mass or more, more preferably 0.05 parts by mass or more, and still more preferably 0.1 part by mass or more, and is preferably 5.0 parts by mass or less, more preferably 2.0 parts by mass or less, and still more preferably 1.0 part by mass or less.

From the viewpoint of further improving weather resistance, the curable composition according to the present invention preferably contains a light stabilizer, and more preferably contains a hindered amine-based light stabilizer. Examples of the hindered amine-based light stabilizer include (1,2,2,6,6-pentamethyl-piperidin-4-yl) methacrylic acid, decanedioic acid bis(2,2,6,6-tetramethyl-1(octyloxy)-4-piperidinyl) ester, 1,1-dimethylethyl hydroperoxide, a reaction product of 70% by weight of octane and 30% by weight of polypropylene, a mixture of bis(1,2,2,6,6-pentamethyl-4-piperidyl)[[3,5-bis(1,1-dimethylethyl)-4-hydroxyphenyl]methyl]butyl malonate, bis(1,2,2,6,6-pentamethyl-4-piperidyl)sebacate, and methyl-1,2,2,6,6-pentamethyl-4-piperidyl sebacate, a mixture of bis(2,2,6,6-tetramethyl-4- piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, 2,2,6,6-tetramethyl-4-piperidyl-1,2,3,4-butanetetracarboxylate, and tridecyl-1,2,3,4-butanetetracarboxylate; and a mixture of 1,2,2,6,6-pentamethyl-4-piperidyl-1,2,3,4-butanetetracarboxylate and tridecyl-1,2,3,4-butanetetracarboxylate.

From the viewpoint of further improving the performance balance of high refractive index, low curing shrinkage, glass adhesiveness, and weather resistance of the cured product to be obtained, in a case where the total amount of the compound (A) and the compound (B) in the curable composition according to the present invention is set to 100 parts by mass, a content of the hindered amine-based light stabilizer in the curable composition according to the present invention is preferably 0.01 parts by mass or more, more preferably 0.03 parts by mass or more, and still more preferably 0.05 parts by mass or more, and is preferably 5.0 parts by mass or less, more preferably 1.0 part by mass or less, still more preferably 0.5 parts by mass or less, and even more preferably 0.2 parts by mass or less.

In the curable composition according to the present invention, in a case where a specific gravity of the curable composition, which is measured using a pycnometer in accordance with JIS Z 8804:2012, is denoted as $d^1$, and a specific gravity of a test piece having a thickness of 250 μm, which is formed of a cured product of the curable composition according to the present invention, is denoted as $d^2$, a curing shrinkage rate of the curable composition, which is represented by $(1 - d^1/d^2) \times 100$, is preferably 9.0% or less, more preferably 8.0% or less, still more preferably 7.5% or less, even more preferably 7.0% or less, and further more preferably 6.5% or less. The lower limit value of the curing shrinkage rate is not particularly limited, but is, for example, 0.1% or more, and may be 1.0% or more, 3.0% or more, 4.0% or more, or 5.0% or more.

In the present embodiment, the test piece having a thickness of 250 um, which is formed of the cured product of the curable composition according to the present invention, can be obtained, for example, by irradiating a curable film formed of the curable composition applied onto a glass substrate with ultraviolet rays in which an exposure amount at 365 nm is 1,000 mJ/cm$^2$, and then heating the obtained cured product in a nitrogen gas atmosphere at 80°C for 30 minutes.

<Method for producing curable composition>

The curable composition according to the present invention can be obtained by mixing the compound (A) and the compound (B) with other components as necessary by a known method in the related art.

From the viewpoint of further improving the performance balance of high refractive index, low curing shrinkage, and glass adhesiveness of a cured product to be obtained, in a case where the total of the curable composition is set to 100% by mass, the total content of the compound (A) and the compound (B) in the curable composition according to the present invention is preferably 70% by mass or more, more preferably 80% by mass or more, still more preferably 90% by mass or more, and even still more preferably 95% by mass or more, and is preferably 100% by mass or less.

[Cured product]

The cured product according to the present invention is obtained by curing the curable composition according to the present invention. Since the cured product according to the present invention has improved the performance balance of high refractive index, low curing shrinkage, and glass adhesiveness, the cured product can be suitably used as an optical material.

From the viewpoint of further improving optical characteristics of the cured product, in a case where the test piece having a thickness of 250 μm is produced from the cured product according to the present embodiment, a refractive index (nD) of the test piece with respect to D-line (589.3 nm) is preferably 1.600 or more, more preferably 1.610 or more, still more preferably 1.620 or more, even more preferably 1.630 or more, even still more preferably 1.635 or more, further more preferably 1.638 or more, and even further more preferably 1.640 or more. The upper limit value of the refractive index (nD) of the test piece with respect to the D-line (589.3 nm) is not particularly limited, but is, for example, 1.700 or less, and may be 1.680 or less, 1.655 or less, 1.650 or less, or 1.645 or less.

From the viewpoint of further improving optical characteristics of the cured product, in a case where the test piece having a thickness of 250 μm is produced from the cured product according to the present embodiment, an Abbe number (vD) of the test piece, which is measured in accordance with ASTM D542, is preferably 20 or more, more preferably 25 or more, still more preferably 28 or more, and even more preferably 30 or more. The upper limit value of the Abbe number (vD) of the test piece is not particularly limited, but is, for example, 45 or less, and may be 42 or less, 39 or less, 37 or less, 35 or less, or 33 or less.

[Molded body]

The molded body according to the present invention is a molded body including the cured product according to the present invention, and can be obtained, for example, by molding the curable composition according to the present invention into a predetermined shape while curing the curable composition.

Since the molded body according to the present invention includes the cured product according to the present invention, the performance balance of high refractive index, low curing shrinkage, and glass adhesiveness is improved, and thus the molded body can be suitably used as an optical material.

From the viewpoint of further improving the performance balance of high refractive index, low curing shrinkage, and glass adhesiveness, in a case where the total of the molded body is set to 100% by mass, a content of the cured product according to the present invention in the molded body according to the present invention is preferably 50% by mass or more, more preferably 70% by mass or more, still more preferably 80% by mass or more, even more preferably 90% by mass or more, even still more preferably 95% by mass or more, and further more preferably 97% by mass or more, and is preferably 100% by mass or less.

[Optical material]

The optical material according to the present invention is an optical material including the molded body according to the present invention, and can be obtained, for example, by molding the curable composition according to the present invention into a predetermined shape while curing the curable composition.

Since the optical material according to the present invention includes the cured product or molded body according to the present invention, the performance balance of high refractive index, low curing shrinkage, and glass adhesiveness is improved. Therefore, the optical material according to the present invention can be used for for example, various optical lenses such as lenses for various sensors, pickup lenses, projector lenses, prisms, fθ lenses, imaging lenses, camera lenses, light guide plates, head-mounted display lenses, plastic eyeglass lenses, goggles, vision correction eyeglass lenses, lenses for imaging equipment, Fresnel lenses for liquid crystal projectors, lenticular lenses, and contact lenses; sealing materials for light emitting diodes (LEDs); optical adhesives used for optical waveguides, wafer-level optical components (WLOs), and optical waveguide bonding; antireflection films used for optical lenses and the like; transparent coatings used for liquid crystal display device members (substrates, light guide plates, films, sheets, and the like); sheets or films attached to windshields of cars or helmets of motorcycles; and transparent substrates, and the like.

Since the optical material according to the present invention has improved the performance balance of high refractive index, low curing shrinkage, and glass adhesiveness, the optical material can be more suitably used as various optical lenses.

Furthermore, since the optical material according to the present invention has improved the performance balance of high refractive index, low curing shrinkage, and glass adhesiveness, the optical material according to the present invention can be suitably used as a laminate of the molded body according to the present invention and a glass substrate, and can be suitably used as a so-called hybrid-type optical lens in which a resin lens is formed on a glass

substrate.

The embodiments of the present invention have been described above, but these are examples of the present invention and various configurations other than the above can be adopted.

In addition, the present invention is not limited to the above-described embodiments, and modifications, improvements, and the like within the range in which the object of the present invention can be achieved are included in the present invention. Examples

Hereinafter, the present embodiment will be described in detail with reference to Examples and the like. It should be noted that the present embodiment is not limited to the descriptions of these examples.

<Example 1>

(Preparation of curable composition)

GSTA (60 parts by mass) as the compound (A) having two or more thio(meth)acrylate groups, A-BPEF (40 parts by mass) as the compound (B), and Irg184 (1-hydroxycyclohexyl ketone, manufactured by BASF, 3 parts by mass) as a polymerization initiator were added to a sample bottle, and mixed using a mixing rotor until the appearance was uniform, thereby obtaining a curable composition.

(Production of cured film)

0.5 mL of the curable composition was applied onto an Eagle-XG (alkali-free glass substrate manufactured by CORNING, 70 × 70 × 0.7 mmT) which had been subjected to a mold release treatment using Novec 1720 (fluorosilane-based coating agent manufactured by 3M Company), the curable composition was sandwiched between the glass substrate and another glass substrate which had been subjected to a mold release treatment through a spacer having a thickness of 250 um, and an end part was fixed with a clip.

The obtained laminate was irradiated with ultraviolet rays from one surface thereof using a non-electrode lamp (H bulb) such that an exposure amount at 365 nm was 1,000 mJ/cm$^2$, and the cured product was released from the glass substrate and heated in a nitrogen gas atmosphere at 80°C for 30 minutes to obtain a cured film having a thickness of 250 um.

A refractive index of the obtained cured film and a shrinkage rate during curing were measured by the following methods. The obtained results are shown in Table 1.

<Measurement of refractive index (nD) and Abbe number (vD)>

The refractive index (nD) and the Abbe number (vD) were measured in accordance with ASTM D542 as follows.

The refractive index (nD) of the cured film with respect to the D-line (589.3 nm) was measured using an Abbe refractometer (DR-M2, manufactured by ATAGO CO., LTD.). RE-3520 (D-line, manufactured by ATAGO CO., LTD.) was used as an interference filter and RE-1196 (monobromonaphthalene, manufactured by ATAGO CO., LTD.) was used as an intermediate liquid, and the measurement was performed by setting the sample temperature to 25°C.

In addition, a refractive index (nC) of the cured film with respect to C-line (wavelength: 656.3 nm) was measured using an Abbe refractometer (manufactured by ATAGO CO., LTD., DR-M2) with RE-3522 (C-line, manufactured by ATAGO CO., LTD.) as an interference filter and RE-1196 (monobromonaphthalene, manufactured by ATAGO CO., LTD.) as an intermediate liquid, with a sample temperature set to 25°C.

In addition, a refractive index (nF) of the cured film with respect to C-line (wavelength: 486.1 nm) was measured using a refractometer (manufactured by ATAGO CO., LTD., DR-M2) with RE-3521 (F-line, manufactured by ATAGO CO., LTD.) as an interference filter and RE-1196 (monobromonaphthalene, manufactured by ATAGO CO., LTD.) as an intermediate liquid, with a sample temperature set to 25°C.

Thereafter, the Abbe number of the cured film was calculated according to the following expression.

$$\text{Abbe number} = (nD - 1)/(nF - nC)$$

<Measurement of curing shrinkage rate>

A specific gravity d$^1$ of the curable composition was measured using a pycnometer (JIS Z 8804:2012). In addition, a specific gravity d$^2$ of the cured film was measured by an Archimedes method (JIS Z 8807:2012). Using the values of the specific gravities, a curing shrinkage rate (%) was calculated by the following expression.

$$\text{Expression: curing shrinkage rate (\%)} = (1 - d^1/d^2) \times 100$$

<Evaluation of glass adhesiveness>

0.5 mL of the curable composition was applied onto an Eagle-XG (alkali-free glass substrate manufactured by CORNING, 70 × 70 × 0.7 mmT) which had been subjected to a mold release treatment using Novec 1720 (fluorosilane-based coating agent manufactured by 3M Company), the curable composition was sandwiched between the glass substrate and an EAGLE-XG (alkali-free glass substrate manufactured by CORNING, 70 × 70 × 0.7 mmT) which had not been subjected to a mold release treatment through a spacer having a thickness of 250 um, and an end part was fixed with a clip.

The obtained laminate was irradiated with ultraviolet rays from one surface thereof using a non-electrode lamp (H bulb) such that an exposure amount at 365 nm was 1,000 mJ/cm$^2$, and the cured product was released from the mold release-treated glass substrate and heated in a nitrogen gas atmosphere at 80°C for 30 minutes to obtain a laminate of resin cured product/glass substrate.

The obtained laminate was evaluated for glass adhesiveness based on the following evaluation standard. The evaluation results are shown in Table 1.

(Evaluation standard)

PASS (good): peeling at an interface between the resin and the glass substrate or cracks in the resin were not observed.

FAIL (poor): peeling at an interface between the resin and the glass substrate or cracks in the resin were observed.

<Examples 2 to 7 and Comparative Example 1>

Each evaluation was performed in the same manner as in Example 1, except that the composition of the curable composition was changed to the composition shown in Table 1. Table 1 shows the composition of the curable composition and various evaluation results.

[Table 1]

Table 1

| | Component name | Example 1 | Example 2 | Example 3 | Example 4 | Example 5 | Example 6 | Example 7 | Comparative Example 1 |
|---|---|---|---|---|---|---|---|---|---|
| Composition of curable composition (part by mass) | GSTA | 60 | 80 | 57 | 57 | | 60 | | 100 |
| | FSHA | | | | | 60 | | 60 | |
| | A-BPEF | 40 | 20 | 38 | 38 | 40 | 40 | 40 | |
| | DNPOA | | | 5 | | | | | |
| | DNEOA | | | | 5 | | | | |
| | Irg184 | 3 | 3 | 3 | 3 | 3 | 3 | 3 | 3 |
| | KBM-5103 | | | | | | 1 | 1 | |
| | AO-60 | | | | | | 0.5 | 0.5 | |
| | LA-82 | | | | | | 0.1 | 0.1 | |
| | LA-46 | | | | | | 0.05 | 0.05 | |
| Physical properties of cured product | Refractive index (nD, 25°C) | 1.633 | 1.637 | 1.640 | 1.640 | 1.642 | 1.630 | 1.641 | 1.642 |
| | Abbe number | 30 | 32 | 31 | 31 | 29 | 31 | 29 | 35 |
| | Curing shrinkage rate (%) | 6.7 | 7.2 | 6.6 | 6.6 | 7.2 | 6.3 | 6.9 | 9.6 |
| | Glass adhesiveness | Pass | Pass | Pass | Pass | Pass | Pass | Pass | Fail |

Details of each component shown in Table 1 are as follows.

(Compound (A))

· GSTA: 1,8-bisacryloylthio-(4-acryloylthiomethyl-3,6-dithiaoctane (compound having the following structure, synthesized according to Japanese Unexamined Patent Publication No. H4-29967)

[Chem. 11]

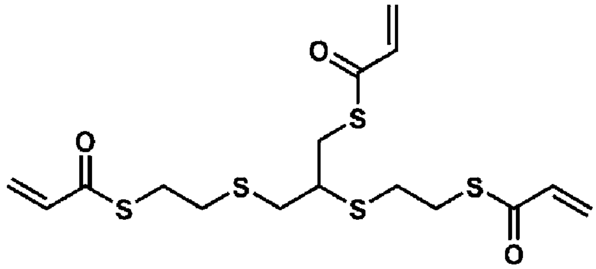

· FSHA: 1,11-bisacryloylthio-(4,8-bisacryloylthiomethyl-3,6,9-trithiaundecane (compound having the following structure, synthesized according to Japanese Unexamined Patent Publication No. H9-132563)

[Chem. 12]

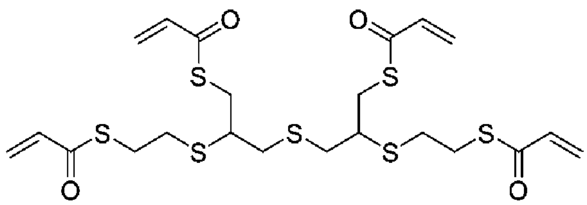

(Compound (B))

· A-BPEF (fluorene-based acrylate monomer (9,9-bis(4-(2-acryloyloxyethoxy)phenyl)fluorene), manufactured by Shin-Nakamura Chemical Co., Ltd.; compound having the following structure)

[Chem. 13]

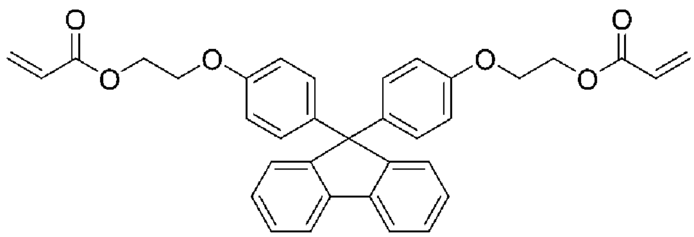

· DNPOA (9,9-bis(3-(meth)acryloyloxypropyl)-2,7-bis(naphth-2-yl)fluorene): compound having the following structure, synthesized according to Pamphlet of International Publication No. WO2021/131942A1

[Chem. 14]

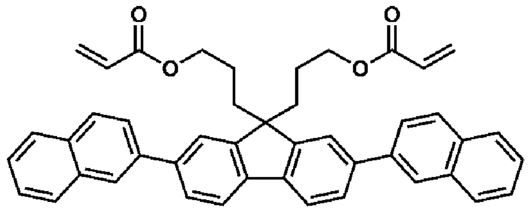

· DNEOA (9,9-bis(2-(meth)acryloyloxyethyl)-2,7-bis(naphth-2-yl)fluorene): compound having the following structure, synthesized by a method described in Synthesis Example 1

[Chem. 15]

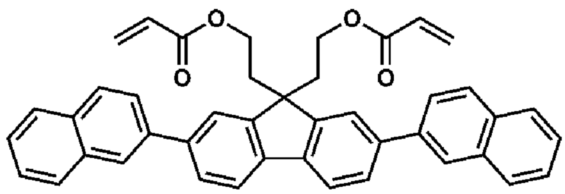

Synthesis Example 1

Step (i) Preparation of 9,9-bis[2'-(3''-chloropropionyloxy)ethyl]-2,7-dinaphthalen-2-yl-9H-fluorene

A mixture of 3.5 g (6.9 mmol) of 9,9-bis(2'-hydroxyethyl)-2,7-dinaphthalen-2-yl-9H-fluorene, 1.93 g (15.2 mmol) of 3-chloropropionyl chloride, and 45 g of chloroform was heated to 60°C and stirred for 6 hours. The hydrochloric acid generated during the reaction was absorbed by an alkaline trap. Thereafter, the reaction solution was concentrated by an evaporator, toluene was added to the concentrate, and the toluene solution was washed with water three times. The toluene solution was concentrated by an evaporator, diisopropyl ether was added to the residue to crystallize, and the obtained solid was subjected to recrystallization to obtain 4.28 g of the target substance as colorless crystals. The yield was 90%, the HPLC purity was 95 Area%, and the melting point was 107°C.

Step (ii) Production of 9,9-bis(2'-acryloyloxyethyl)-2,7-dinaphthalen-2-yl-9H-fluorene

A mixture of 3.03 g (4.4 mmol) of 9,9-bis[2'-(3"-chloropropionyloxy)ethyl]-2,7-dinaphthalen-2-yl-9H-fluorene, 15 mg of methylhydroquinone, and 25 g of dichloromethane was added to a mixture of 1.0 g (9.9 mmol) of triethylamine and 3.0 g of chloroform at 2°C (ice bath) over 5 minutes. Thereafter, the mixture was stirred at room temperature overnight, and the dichloromethane solution was washed with distilled water until the solution became neutral. The dichloromethane layer was separated, concentrated by an evaporator, methanol was added to the residue to crystallize, the crystals were filtered off, and the filtrate was concentrated to obtain 2.58 g of the target substance as colorless crystals. The yield was 95%, the HPLC purity was 97.5 Area%, and the melting point was 142°C.

(Other components)

· Irg184: polymerization initiator (1-hydroxycyclohexyl phenyl ketone, manufactured by BASF; compound having the following structure)

[Chem. 16]

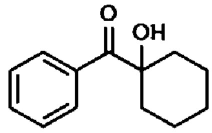

· KBM-5103: silane coupling agent (3-acryloxypropyltrimethoxysilane, manufactured by Shin-Etsu Chemical Co., Ltd.; compound having the following structure)

[Chem. 17]

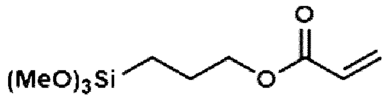

· AO-60: antioxidant (pentaerythritol-tetrakis[3-(3,5-di-tert-butyl-4-hydroxyphenyl)propionate], manufactured by ADEKA Corporation; compound having the following structure)

[Chem. 18]

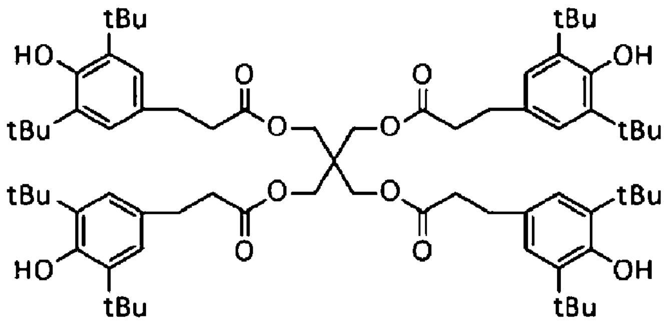

· LA-82: hindered amine-based light stabilizer ((1,2,2,6,6-pentamethyl-piperidin-4-yl) methacrylic acid, manufactured by ADEKA Corporation, compound having the following structure)

[Chem. 19]

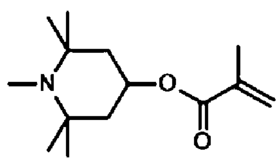

· LA-46: ultraviolet absorber (2-(4,6-diphenyl-1,3,5-triazin-2-yl)-5-[2-(2-ethylhexanoyloxy)ethoxy]phenol, compound having the following structure, manufactured by ADEKA Corporation)

[Chem. 20]

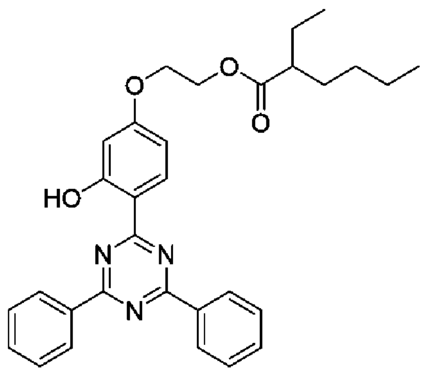

Priority is claimed on Japanese Patent Application No. 2022-052317, filed March 28, 2022, the disclosure of which is incorporated herein by reference.

## Claims

1. A curable composition comprising:

a compound (A) having two or more thio(meth)acrylate groups; and
a compound (B) represented by Formula (1),

[Chem. 1]

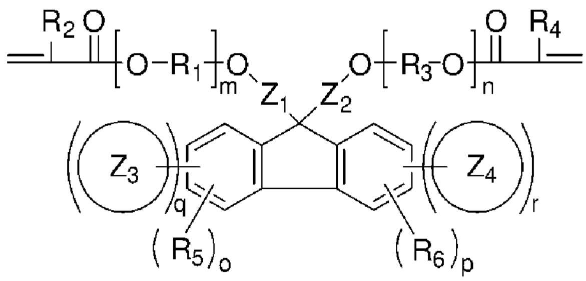

(1)

(in Formula (1), $Z_1$ and $Z_2$ each independently represent an aromatic carbon ring or an alkylene group, provided that any hydrogen atom may be substituted with an alkyl group or an alkoxy group, $Z_3$ and $Z_4$ each independently represent an aromatic carbon ring or an alkyl group, provided that any hydrogen atom may be substituted with an alkyl group or an alkoxy group, $R_1$ and $R_3$ each independently represent an alkylene group having 1 or more and 10 or less carbon atoms, $R_2$ and $R_4$ each independently represent a hydrogen atom or a methyl group, $R_5$ and $R_6$ each independently represent an alkyl group, m and n each independently represent an integer of 0 or more, and o, p, q and r each represent an integer of 0 or more, satisfying relationships of $o + q \leq 4$ and $p + r \leq 4$).

2. The curable composition according to Claim 1,

wherein the compound (A) includes at least one selected from the group consisting of a compound represented by Formula (2),

[Chem. 2]

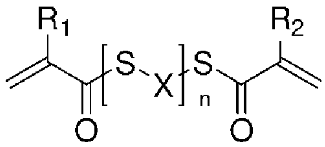

(2)

(in Formula (2), n represents an integer of 1 or more and 5 or less, $R_1$ and $R_2$ each independently represent a hydrogen atom or a methyl group, and X represents an alkylene group having 1 or more and 4 or less carbon atoms, provided that any hydrogen atom may be substituted with a structure of Formula (3)),

[Chem. 3]

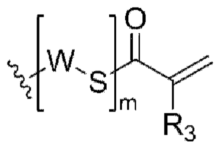

(3)

(in Formula (3), $R_3$ represents a hydrogen atom or a methyl group, a plurality of $R_3$'s may be the same or different from each other, W represents an alkylene group having 1 or more and 4 or less carbon atoms, and m represents an integer of 1 or more).

**3.** The curable composition according to Claim 1 or 2,
wherein the compound (A) includes at least one selected from the group consisting of compounds represented by the following chemical formulae,

[Chem. 4]

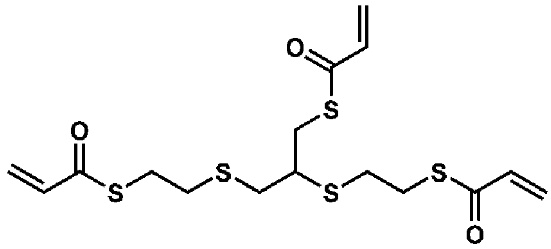

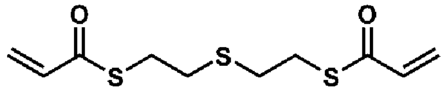

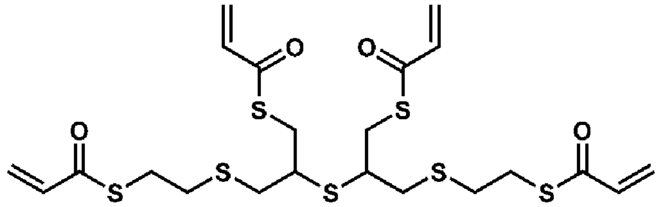

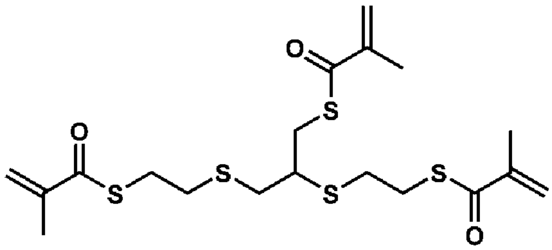

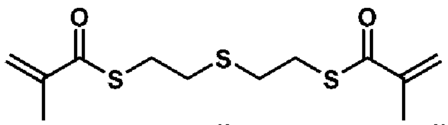

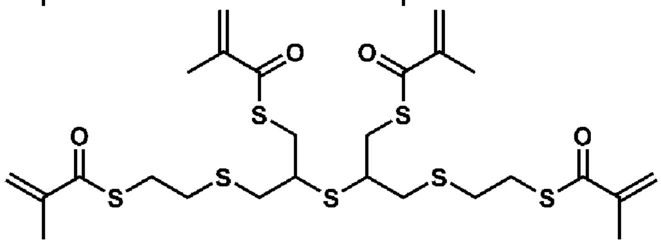

.

4. The curable composition according to any one of Claims 1 to 3, wherein a content of the compound (B) in the curable composition is 10 parts by mass or more and 70 parts by mass or less with respect to 100 parts by mass of the curable composition.

5. The curable composition according to any one of Claims 1 to 4, wherein the compound (B) includes at least one selected from the group consisting of 9,9-bis(4-(meth)acryloyloxyphenyl)fluorene, 9,9-bis(4-(2-(meth)acryloyloxyethoxy)phenyl)fluorene, 9,9-bis(4-(3-(meth)acryloyloxypropoxy)phenyl)fluorene, 9,9-bis(4-(2-(meth)acryloyloxypropoxy)phenyl)fluorene, 9,9-bis(4-(meth)acryloyloxy-3-methylphenyl)fluorene, 9,9-bis[4-(2-(meth)acryloyloxyethoxy)-3-methylphenyl]fluorene, 9,9-bis[4-(3-(meth)acryloyloxypropoxy)-3-methylphenyl]fluorene, 9,9-bis[4-(2-(meth)acryloyloxypropoxy)-3-methylphenyl]fluorene, 9,9-bis(4-(meth)acryloyloxy-3-ethylphenyl)fluorene, 9,9-bis[4-(2-(meth)acryloyloxyethoxy)-3-ethylphenyl]fluorene, 9,9-bis[4-(3-(meth)acryloyloxypropoxy)-3-ethylphenyl]fluorene, 9,9-bis[4-(2-(meth)acryloyloxypropoxy)-3-ethylphenyl]fluorene, 9,9-bis(2-(meth)acryloyloxyethyl)-1,8-diphenylfluorene, 9,9-bis(3-(meth)acryloyloxypropyl)-1,8-diphenylfluorene, 9,9-bis(2-(meth)acryloyloxypropyl)-1,8-diphenylfluorene, 9,9-bis(2-(meth)acryloyloxyethyl)-2,7-diphenylfluorene, 9,9-bis(3-(meth)acryloyloxypropyl)-2,7-diphenylfluorene, 9,9-bis(2-(meth)acryloyloxypropyl)-2,7-diphenylfluorene, 9,9-bis(2-(meth)acryloyloxyethyl)-3,6-diphenylfluorene, 9,9-bis(3-(meth)acryloyloxypropyl)-3,6-diphenylfluorene, 9,9-bis(2-(meth)acryloyloxypropyl)-3,6-diphenylfluorene, 9,9-bis(2-(meth)acryloyloxyethyl)-4,5-diphenylfluorene, 9,9-bis(3-(meth)acryloyloxypropyl)-4,5-diphenylfluorene, 9,9-bis(2-(meth)acryloyloxypropyl)-4,5-diphenylfluorene, 9,9-bis(2-(meth)acryloyloxyethyl)-1,8-bis(naphth-1-yl)fluorene, 9,9-bis(3-(meth)acryloyloxypropyl)-1,8-bis(naphth-1-yl)fluorene, 9,9-bis(2-(meth)acryloyloxypropyl)-1,8-bis(naphth-1-yl)fluorene, 9,9-bis(2-(meth)acryloyloxyethyl)-2,7-bis(naphth-1-yl)fluorene, 9,9-bis(3-(meth)acryloyloxypropyl)-2,7-bis(naphth-1-yl) fluorene, 9,9-bis(2-(meth)acryloyloxypropyl)-2,7-bis(naphth-1-yl)fluorene, 9,9-bis(2-(meth)acryloyloxyethyl)-3,6-bis(naphth-1-yl)fluorene, 9,9-bis(3-(meth)acryloyloxypropyl)-3,6-bis(naphth-1-yl)fluorene, 9,9-bis(2-(meth)acryloyloxypropyl)-3,6-bis(naphth-1-yl)fluorene, 9,9-bis(2-(meth)acryloyloxyethyl)-4,5-bis(naphth-1-yl)fluorene, 9,9-bis(3-(meth)acryloyloxypropyl)-4,5-bis(naphth-1-yl)fluorene, 9, 9-bis (2- (meth) acryloyloxypropyl) -4, 5-bis (naphth-1-yl) fluorene, 9,9-bis(2-(meth)acryloyloxyethyl)-1,8-bis(naphth-2-yl)fluorene, 9,9-bis(3-(meth)acryloyloxypropyl)-1,8-bis(naphth-2-yl)fluorene, 9,9-bis(2-(meth)acryloyloxypropyl)-1,8-bis(naphth-2-yl)fluorene, 9,9-bis(2-(meth)acryloyloxyethyl)-2,7-bis(naphth-2-yl)fluorene, 9,9-bis(3-(meth)acryloyloxypropyl)-2,7-bis(naphth-2-yl) fluorene, 9,9-bis(2-(meth)acryloyloxypropyl)-2,7-bis(naphth-2-yl)fluorene, 9,9-bis(2-(meth)acryloyloxyethyl)-3,6-bis(naphth-2-yl)fluorene, 9,9-bis(3-(meth)acryloyloxypropyl)-3,6-bis(naphth-2-yl)fluorene, 9,9-bis(2-(meth)acryloyloxypropyl)-3,6-bis(naphth-2-yl)fluorene, 9,9-bis(2-(meth)acryloyloxyethyl)-4,5-bis(naphth-2-yl)fluorene, 9,9-bis(3-(meth)acryloyloxypropyl)-4,5-bis(naphth-2-yl)fluorene, and 9,9-bis(2-(meth)acryloyloxypropyl)-4,5-bis(naphth-2-yl)fluorene.

**6.** The curable composition according to any one of Claims 1 to 5, further comprising:
a polymerization initiator.

**7.** The curable composition according to any one of Claims 1 to 6, further comprising:
at least one selected from the group consisting of a silane coupling agent, an antioxidant, an ultraviolet absorber, and a light stabilizer.

**8.** The curable composition according to any one of Claims 1 to 7,
wherein, in a case where a specific gravity of the curable composition, which is measured using a pycnometer in accordance with JIS Z 8804:2012, is denoted as $d^1$, and a specific gravity of a test piece having a thickness of 250 um, which is formed of a cured product of the curable composition, is denoted as $d^2$, a curing shrinkage rate of the curable composition, which is represented by $(1 - d^1/d^2) \times 100$, is 9.0% or less.

**9.** The curable composition according to any one of Claims 1 to 8,
wherein the curable composition is usable in an optical material.

**10.** A cured product obtained by curing the curable composition according to any one of Claims 1 to 9.

**11.** The cured product according to Claim 10,
wherein, in a case where a test piece having a thickness of 250 μm is produced from the cured product, a refractive index (nD) of the test piece with respect to D-line (589.3 nm) is 1.600 or more.

**12.** The cured product according to Claim 10 or 11,
wherein, in a case where a test piece having a thickness of 250 μm is produced from the cured product, an Abbe number (vD) of the test piece, which is measured in accordance with ASTM D542, is 20 or more.

**13.** A molded body comprising:
the cured product according to any one of Claims 10 to 12.

**14.** An optical material comprising:
the molded body according to Claim 13.

**15.** The optical material according to Claim 14, further comprising:

a glass substrate,
wherein the optical material is a laminate of the molded body and the glass substrate.

**16.** The optical material according to Claim 14 or 15, wherein the optical material is an optical lens.

**INTERNATIONAL SEARCH REPORT**

International application No. **PCT/JP2023/005832**

**A. CLASSIFICATION OF SUBJECT MATTER**

***C08F 220/38***(2006.01)i; ***B32B 17/10***(2006.01)i; ***B32B 27/30***(2006.01)i; ***C08F 220/20***(2006.01)i; ***G02B 1/04***(2006.01)i; ***G02C 7/00***(2006.01)i
FI: C08F220/38; B32B17/10; B32B27/30 A; C08F220/20; G02B1/04; G02C7/00

According to International Patent Classification (IPC) or to both national classification and IPC

**B. FIELDS SEARCHED**

Minimum documentation searched (classification system followed by classification symbols)

C08F220/38; B32B17/10; B32B27/30; C08F220/20; G02B1/04; G02C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2007-58111 A (DAINIPPON PRINTING CO., LTD.) 08 March 2007 (2007-03-08) claims, paragraphs [0026]-[0031], [0047], examples | 1-16 |
| Y | claims, paragraphs [0026]-[0031], [0047], examples | 1-16 |
| X | JP 2011-162610 A (OSAKA GAS CHEM. KK) 25 August 2011 (2011-08-25) claims, paragraphs [0093], [0097]-[0098], examples | 1-16 |
| Y | claims, paragraphs [0093], [0097]-[0098], examples | 1-16 |
| X | JP 2004-294720 A (MATSUSHITA ELECTRIC WORKS LTD.) 21 October 2004 (2004-10-21) claim 4, examples | 1-6, 8-14 |
| Y | claim 4, examples | 1-15 |
| A | entire text | 16 |
| Y | JP 9-132563 A (MITSUI TOATSU CHEM. INC.) 20 May 1997 (1997-05-20) claims, paragraph [0021], examples | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/005832**

**C. DOCUMENTS CONSIDERED TO BE RELEVANT**

| Category* | Citation of document, with indication, where appropriate, of the relevant passages | Relevant to claim No. |
|---|---|---|
| Y | JP 4-029967 A (MITSUI TOATSU CHEM. INC.) 31 January 1992 (1992-01-31) claims, page 1, right column, line 19 to page 2, upper left column, line 2, example 3 | 1-16 |
| Y | JP 2009-167353 A (HITACHI CHEM. CO., LTD.) 30 July 2009 (2009-07-30) claim 10, paragraphs [0062], [0085] | 7, 15 |
| A | entire text | 1-6, 8-14, 16 |

Form PCT/ISA/210 (second sheet) (January 2015)

**INTERNATIONAL SEARCH REPORT**
**Information on patent family members**

International application No.
**PCT/JP2023/005832**

| Patent document cited in search report | Publication date (day/month/year) | Patent family member(s) | Publication date (day/month/year) |
|---|---|---|---|
| JP 2007-58111 A | 08 March 2007 | (Family: none) | |
| JP 2011-162610 A | 25 August 2011 | (Family: none) | |
| JP 2004-294720 A | 21 October 2004 | (Family: none) | |
| JP 9-132563 A | 20 May 1997 | (Family: none) | |
| JP 4-029967 A | 31 January 1992 | (Family: none) | |
| JP 2009-167353 A | 30 July 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 199824761 A
- JP H8325337 A
- JP H429967 A
- JP H9132563 A
- WO 2021131942 A1
- JP 2022052317 A